Europäisches Patentamt

European Patent Office

Office européen des brevets

(19)

(11) Publication number: **0 327 148 B1**

(12) **EUROPEAN PATENT SPECIFICATION**

(45) Date of publication of patent specification :
27.11.91 Bulletin 91/48

(51) Int. Cl.$^5$ : **F01N 7/14, F16L 59/14**

(21) Application number : **89200124.9**

(22) Date of filing : **20.01.89**

(54) Insulating device for an internal combustion engine exhaust system.

(30) Priority : **02.02.88 IT 1928488**

(43) Date of publication of application :
**09.08.89 Bulletin 89/32**

(45) Publication of the grant of the patent :
**27.11.91 Bulletin 91/48**

(84) Designated Contracting States :
**DE ES FR GB**

(56) References cited :
**EP-A- 0 274 144**
**DE-A- 1 901 069**
**DE-A- 3 043 363**
**FR-A- 2 324 866**
**US-A- 3 460 579**

(73) Proprietor : **ALFA LANCIA S.p.A.**
**Viale Alfa Romeo**
**I-20020 Arese, Milan (IT)**

(72) Inventor : **Sala, Alberto**
**Viale Monte Ceneri 36**
**I-20155 Milan (IT)**

(74) Representative : **De Carli, Erberto et al**
**ING. BARZANO' & ZANARDO MILANO S.p.A.**
**Via Borgonuovo, 10**
**I-20121 Milano (IT)**

## Description

This invention relates to a exhaust system of an internal combustion engine.

During operation, internal combustion engines undergo vibration and shaking due to the alternating forces and strongly variable torques produced in their interior.

This gives rise to stresses which can be particularly damaging to the exhaust system pipes especially if the engine is cross-mounted and the pipes are directed longitudinally, because the engine is subjected to angular oscillations about its shaft which can reach large proportions.

The exhaust manifold pipes, which are fixed rigidly to the cylinder head, consequently undergo strong oscillation compared with the end pipes of the exhaust system, which are elastically secured to the vehicle body.

Consequently fractures can easily occur in those sections of the pipes subjected to fatigue stress by the variable-frequency vibrations deriving mainly from the engine.

To prevent damage to the pipes, flexible elements in the form of pipe portions with an at least partially undulated wall are inserted into these exhaust pipes. Such flexible pipe portions enable the exhaust manifold pipes to oscillate with a certain freedom relative to the end pipes of the system without transmitting appreciable fatigue stresses to them, while at the same time acting as a filter for the vibrations produced by the engine.

However these at least partially undulated pipe portions create problems of another kind if the exhaust system is provided with exhaust gas treatment devices such as catalytic converters for reducing the pollutants emitted by the engine such as carbon monoxide (CO), unburnt hydrocarbons (HC) and nitrogen oxides (NOx).

These treatment devices including catalytic converters, operate effectively, especially as promoters of carbon monoxide and unburnt hydrocarbon oxidation reactions and nitrogen oxide reduction reactions, if the exhaust gas is at a fairly high temperature of not less than 300°C.

In this respect, various systems for insulating the exhaust pipes upstream of the treatment devices have been proposed for preventing cooling of the exhaust gas emitted by the engine. The question of exhaust gas cooling is particularly serious if in the exhaust system upstream of the post-combustion muffler there are positioned pipe portions with at least partially undulated walls, as previously described, because such an undulated wall which is both thin and of large surface area represents a strong source of heat dispersion from the exhaust gas.

On the other hand, insulating these pipe portions comprising at least partially undulated walls is a problem not easily solved, because the flexibility of such pipe portions must be preserved. Generally, to the ends of said exhaust pipe portions with at least partially undulated walls there is fixed a metal braided sleeve of determined elasticity the purpose of which is to retain, especially axially, and protect so that the assembly formed from the pipe portion and sleeve has the required axial elasticity and flexural characteristics.

DE-A-3043363 refers to an exhaust system of an internal combustion engine which has one corrugated pipe portion covered by thermal insulation means. This system provides, as thermal insulation means, an external corrugated pipe portion and a thermal insulating material which fills the space between the internal and the external corrugated pipe portions. This structure results particularly rigid and the heat transfer is very difficult.

US-A-3460579 relates to a flexible insulated metal hose having layers of plastics material which do not bear the stresses and break.

The main object of the present invention is to provide an insulation device for exhaust pipe portions with at least partially undulated walls which in practice does not interfere with and does not modify the optimised flexibility characteristics of the pipe portion-sleeve assembly.

A further object of the invention is to ensure that maintaining the flexibility characteristics of the assembly does not limit the choice of the insulation device and that its dimensioning can be based merely on the extent of thermal insulation desired.

The aforesaid objects are attained according to an exhaust system of an internal combustion engine as claimed in claim 1.

With this embodiment, good thermal insulation of the undulated wall pipe portions is obtained, without altering their flexibility characteristics.

Characteristics and advantages of the invention will be apparent from the description of a preferred embodiment of the invention given hereinafter with reference to the accompanying drawing in which :

Figure 1 is a plan view of an internal combustion engine exhaust system ;

Figure 2 is an enlarged view, portly in longitudinal section, of a pipe of the system of Figure 1 ; and

Figure 3 is an enlarged partial view of a detail of the pipe of Figure 2, shown in longitudinal section.

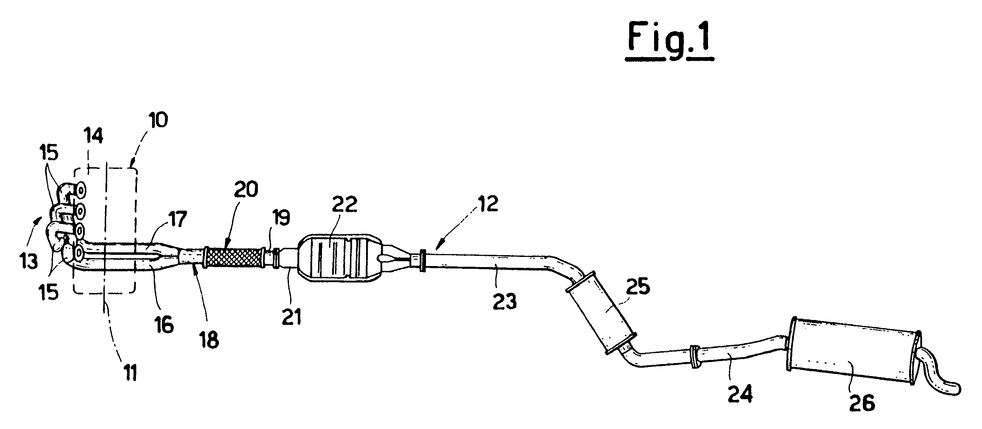

In Figure 1 the reference numeral 10 indicates an internal combustion engine, shown with dashed lines, of a front-drive motor vehicle.

The engine 10, with four in-line cylinders, is positioned transversely, its shaft axis being indicated by 11, and its exhaust system, indicated overall by 12, is formed from pipes positioned substantially longitudinally.

In Figure 1, the reference numeral 13 indicates the exhaust manifold, which is fixed to the cylinder head 14 and is formed from individual pipes 15 connected to the respective cylinders. The pipes 15 converge in pairs into the exhaust connection pipes 16 and 17, which open into a common exhaust pipe indicated overall by 18.

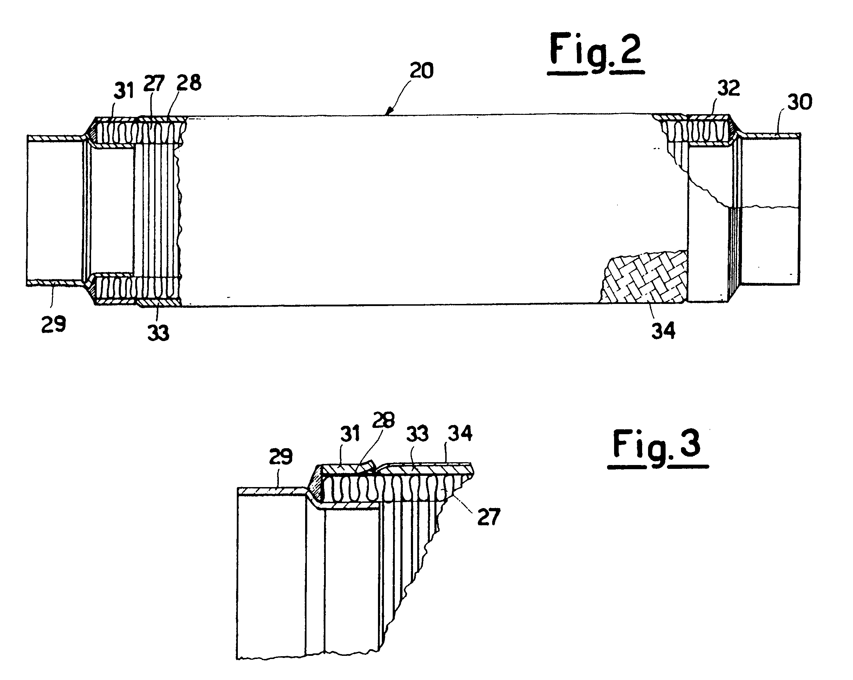

The pipes 15, 16, 17 can be insulated thermally by known methods as their walls are smooth. Far example they can be covered with pressed sheet metal jackets to create an insulating interspace. The pipe 18 comprises a first section 19 comprising of a corrufated exhaust wall pipe portion 20 provided with thermal insulation means ; the pipe 18 also comprises a second section 21 in which an exhaust gas catalytic converter indicated overall by 22 is located, and finally a third and fourth section 23 and 24 containing two silencers indicated by 2S and 26 respectively. The pipe portion 20, which is shown in detail in Figures 2 and 3, is provided with an undulated steel wall indicated by 27, and a braided (and thus partly elastic) wire sheath 28 mounted over the undulated wall to provide protection and retention, particularly in an axial direction.

The undulated wall 27 and braided wire sheath 28 are welded at their ends to connection collars indicated by 29 and 30, and to rings indicated by 31 and 32.

The collars 29 and 30 are then welded to the section 19 of the pipe 18.

About the braided wire sheath 28 there is wrapped a blanket of thermally insulating yieldable arterial indicated by 33, and over this there is drawn a braided wire sheath, also partly elastic and indicated by 34.

The blanket 33 is preferably fored from an inner layer of ceramic fibres, such as known commercially by the name "Kerlane 45" or "Fiberfrax", and two outer layers of glass fibre fabric, or equivalent arterial, these being cemented together.

The glass fibre layer ; have good mechanical resistance to stresses and therefor can be placed in contact with the braided wire sheath 28 and braided wire sheath 34.

The edges of the braided wire sheath 34 are elastically drawn over the braided wire sheath 28 and are retained by the rings 31 and 32, so as to provide protection and retention for the insulating blanket 33.

The pipe portion 20, formed as described heretofore, provides flexibility to the pipe 18 ; it enables the manifold 13 and pipes 16 and 17 to move relative to the sections 21, 23 and 24 of the pipe 18 by freely following the oscillations of the engine 10 about its axis 11, and also acts as a filter for preventing vibrations reaching the secctions 21, 23, 24.

The pipe portion 20 is also provided with a thermal insulation means consisting of the blanket 33 and wire sheath 34, which considerably reduces heat transfer from the exhaust gas to the outside atmosphere through the thin and large-area undulated wall 27, so that the exhaust gas enters the catalytic muffler 22 at a sufficiently high temperature for the oxidation and reduction reactions.

The blanket 33 and wire sheath 34 thus form an insulation device which is sufficiently yieldable to preserve the flexibility of both the undulated wall 27 and the sheath 28.

## Claims

1. An exhaust system of an internal combustion engine, having one corrugated exhaust pipe portion (20) covered by thermal insulation means, characterised in that said thermal insulation means comprise one internal (28) and one external (34) braided wire sheaths and layers of thermal insulating fibrous material interposed between said braided wire sheaths (28, 34), said internal braided wire sheath (28) being wrapped around said corrugated pipe portion (20).

2. An exhaust system according to claim 1, wherein at least one layer of ceramic fibres and at least one layer of glass fibre fabric are interposed between said braided wire sheaths (28, 34).

3. An exhaust system according to claim 2, wherein the layer of glass fibre fabric contacts the internal braided wire sheath (28).

4. An exhaust system according to claim 2, wherein two outer layers of glass fibre fabric and an inner layer of ceramic fibres are interposed between said braided wire sheaths (28, 34).

5. An exhaust system according to claim 4, wherein the two layers of glass fibre fabric contact the internal (28) and the external (34) braided wire sheaths respectively.

6. An exhaust system according to anyone of the preceding claims, wherein said external braided wire sheath (34) and said layers of thermal insulating fibrous material are retained around the corrugated exhaust pipe portion (20) by means of rings mounted on said ends of the pipe portion (20).

## Patentansprüche

1. Abgasanlage für eine Verbrennungskraftmaschine mit einem von thermischem Isoliermittel umgebenen gewellten Auspuffrohrabschnitt (20), dadurch gekennzeichnet, daß die thermischen Isoliermittel eine innere (28) und eine äußere (34) Ummantelung aus geflochtenem Draht und zwischen den Ummantelungen (28, 34) aus geflochtenem Draht Schichten aus thermisch isolierenden Material umfassen, wobei die innere Ummantelung (28) aus geflochtenem Draht um den gewellten Rohrabschnitt (20) angeordnet ist.

2. Abgasanlage nach Anspruch 1, wobei wenigstens eine Schicht aus keramischen Fasern und wenigstens eine Schicht aus einem Glasfasergewebe zwischen den Ummantelungen (28, 34) aus geflochtenem Draht angeordnet sind.

3. Abgasanlage nach Anspruch 2, wobei die Schicht aus Glasfasergewebe an der inneren Ummantelung (28) aus geflochtenem Draht anliegt.

4. Abgasanlage nach Anspruch 2, wobei zwei Außenschichten aus Glasfasergewebe und eine Innenschicht aus keramischen Fa-sern zwischen den Ummantelungen (28, 34) aus geflochtenem Draht angeordnet sind.

5. Abgasanlage nach Anspruch 4, wobei die zwei Schichten aus Glasfasergewebe an der inneren (28) und der äußeren (34) Ummantelung aus geflochtenem Draht anliegen.

6. Abgasanlage nach einem der vorangehenden Ansprüche, wobei die äußere Ummantelung (34) aus geflochtenem Draht und die Schichten aus thermisch isolierendem Fasermaterial um den gewellten Auspuffrohrabschnitt (20) mit Hilfe von an den Enden des Rohrabschnittes (20) angeordneten Ringen gehalten sind.

## Revendications

1. Circuit d'échappement de moteur à combustion interne, ayant une partie ondulée (20) de tube d'échappement, recouverte d'une isolation thermique, caractérisé en ce que l'isolation thermique comporte des gaines de fils métalliques tressés interne (28) et externe (34) et des couches d'un matériau fibreux d'isolation thermique disposées entre les gaines (28, 34) de fils métalliques tressés, la gaine interne (28) de fils métalliques tressés étant enroulée autour de la partie ondulée (20) de tube.

2. Circuit d'échappement selon la revendication 1, dans lequel une couche au moins de fibres céramiques et une couche au moins d'une étoffe de fibres de verre sont disposées entre les gaines (28, 34) de fils métalliques tressés.

3. Circuit d'échappement selon la revendication 2, dans lequel la couche d'étoffe de fibres de verre est au contact de la gaine interne (28) de fils métalliques tressés.

4. Circuit d'échappement selon la revendication 2, dans lequel deux couches externes d'étoffe de fibres de verre et une couche interne de fibres céramiques sont disposées entre les gaines (28, 34) de fibres métalliques tressées.

5. Circuit d'échappement selon la revendication 4, dans lequel les deux couches d'étoffe de fibres de verre sont au contact des gaines de fils métalliques tressés interne (28) et externe (34) respectivement.

6. Circuit d'échappement selon l'une quelconque des revendications précédentes, dans lequel la gaine externe (34) de fils métalliques tressés et les couches du matériau fibreux d'isolation thermique sont retenues autour de la partie ondulée (20) de tube d'échappement par des bagues montées sur les extrémités de la partie de tube (20).

# Fig.1

EP 0 327 148 B1

# Fig. 2

# Fig. 3